# FASCICULE DE BREVET EUROPEEN

(11) **EP 4 449 356 B1**
(45) Date de publication et mention de la délivrance du brevet: **29.10.2025**
(21) Numéro de dépôt: 22835041.9
(22) Date de dépôt: 14.12.2022
(51) Int. Cl.: G06T 7/73, G06T 7/246

(54) **PROCÉDÉ ET DISPOSITIF DE SUIVI EN TEMPS RÉEL DE LA POSE D'UNE CAMÉRA PAR GESTION AUTOMATIQUE D'UNE BASE D'IMAGES-CLÉS**
VERFAHREN UND VORRICHTUNG ZUR ECHTZEITVERFOLGUNG DER POSITION EINER KAMERA DURCH AUTOMATISCHE VERWALTUNG EINER SCHLÜSSELBILDDATENBANK
METHOD AND DEVICE FOR REAL-TIME TRACKING OF THE POSE OF A CAMERA BY AUTOMATIC MANAGEMENT OF A KEY-IMAGE DATABASE

(30) Priorité: 15.12.2021 FR 2113591
(43) Date de publication de la demande: 23.10.2024
(73) Titulaire: Surgar, 63000 Clermont-Ferrand (FR); Université Clermont Auvergne, 63001 Clermont-Ferrand (FR); Centre National de la Recherche Scientifique, 75016 Paris (FR); Clermont Auvergne INP, 63170 Aubière (FR)
(72) Inventeur: BARTOLI, Adrien, 63000 Clermont-Ferrand (FR); CHANDELON, Kilian, 63730 Les Martres de Veyre (FR)
(74) Mandataire: Bringer IP
(86) Numéro de dépôt international: PCT/EP2022/085905
(87) Numéro de publication internationale: WO 2023/111045

(56) Documents cités:
- US-A1- 2016 292 867
- COLLINS T ET AL: "Augmented Reality Guided Laparoscopic Surgery of the Uterus", IEEE TRANSACTIONS ON MEDICAL IMAGING, IEEE, USA, vol. 40, no. 1, 28 September 2020 (2020-09-28), pages 371 - 380, XP011827612, ISSN: 0278-0062, [retrieved on 20201229], DOI: 10.1109/TMI.2020.3027442
- CHEN Y. ET AL: "AN AUTOMATIC KEY-FRAME SELECTION METHOD FOR VISUAL ODOMETRY BASED ON THE IMPROVED PWC-NET", vol. XLIII-B2-2020, 12 August 2020 (2020-08-12), pages 567 - 573, XP055940092, Retrieved from the Internet <URL:https://www.int-arch-photogramm-remote-sens-spatial-inf-sci.net/XLIII-B2-2020/567/2020/isprs-archives-XLIII-B2-2020-567-2020.pdf> DOI: 10.5194/isprs-archives-XLIII-B2-2020-567-2020
- KUO JUICHUNG ET AL: "Redesigning SLAM for Arbitrary Multi-Camera Systems", 2020 IEEE INTERNATIONAL CONFERENCE ON ROBOTICS AND AUTOMATION (ICRA), IEEE, 31 May 2020 (2020-05-31), pages 2116 - 2122, XP033826889, DOI: 10.1109/ICRA40945.2020.9197553

## Description

### Domaine technique de l'invention

L'invention concerne un procédé et un dispositif de suivi en temps réel de la pose d'une caméra par rapport à un modèle 3D, en particulier pour des applications de réalité augmentée, notamment pour les procédures endoscopiques, en particulier cœlioscopiques, par exemple à des fins de chirurgie ou d'interventions robotisées. L'invention concerne plus particulièrement un procédé et un dispositif permettant la gestion automatique d'une base d'images-clés, en particulier l'ajout automatique d'images-clés pendant le suivi en temps réel.

### Arrière-plan technologique

La cœlioscopie, aussi appelée laparoscopie, est une technique médicale d'exploration visuelle de l'intérieur du corps d'un patient grâce à un endoscope, ou plus particulièrement un cœlioscope ou laparoscope lorsqu'il est utilisé pour observer la cavité intra-abdominale et/ou pelvienne d'un patient. Un endoscope comprend généralement une source lumineuse et un moyen de captation de la lumière, par exemple des fibres optiques et/ou un capteur vidéo.

Lors d'une intervention chirurgicale par cœlioscopie, le cœlioscope permet une vision directe ou déportée de la cavité intra-abdominale et permet l'observation du site chirurgical et l'intervention directe à l'aide d'outils chirurgicaux. Cette technique chirurgicale présente l'avantage de ne pas nécessiter d'ouverture large de la paroi abdominale (contrairement à la laparotomie ou cœliotomie), faisant de celle-ci une technique minimalement invasive.

De manière analogue, des interventions chirurgicales minimalement invasives utilisant un endoscope peuvent être mises en œuvre dans la cavité thoracique (thoracoscopie) ou dans la cavité pelvienne. On parle généralement d'opération endoscopique ou endoscopie chirurgicale.

Les avancées technologiques récentes ont fait évoluer la cœlioscopie d'une vision simple par le personnel médical de l'image de la zone à opérer vers une vision augmentée, qui permet d'afficher à l'écran des informations supplémentaires sur l'image visualisée de façon à assister le personnel médical lors de l'opération.

En particulier, les techniques de vision par ordinateur sont utilisées sur l'image obtenue par le cœlioscope en temps réel pour apporter un complément d'information par réalité augmentée. Par exemple, on peut afficher sur l'image une structure cachée dans l'organe, comme une tumeur. En particulier, on peut souhaiter afficher un lieu d'intervention (incision par exemple) sur l'image de l'organe. Plus généralement, on parle ici de procédures ou de chirurgie guidées par ordinateur.

La pose de la caméra, c'est-à-dire sa position et son orientation dans un système de coordonnées donné, est calculée en temps réel par rapport à un modèle 3D de l'environnement dans lequel la caméra circule, de façon à pouvoir afficher sur l'image captée par la caméra des éléments augmentés issus d'un modèle de réalité augmenté préopératoire et précalculé. Ce modèle de réalité augmenté préopératoire provient typiquement d'une imagerie préopératoire ou peropératoire par TDM, IRM, US ou autre modalité issue de la radiologie. Ces images préopératoire ou peropératoire, qu'elles soient 2D ou 3D, sont supposées recalées sur le modèle 3D au préalable.

En particulier, la pose de la caméra se calcule à partir d'une base d'images-clés et d'une base contenant la pose de chaque image-clé dans le référentiel du modèle 3D de l'environnement peropératoire qui agit par comparaison de l'image en cours avec les images-clés de cette base d'images-clés.

Cette méthode permet de déterminer la pose de la caméra dans les zones de l'environnement connues mais ne permet pas d'estimer la pose de la caméra dans les zones non explorées, lorsqu'aucune image-clé ne répond aux critères de ressemblance avec l'image en cours, ou du fait de modifications de l'apparence de l'organe ou de la cavité filmée, notamment par déplacements, des changements de couleurs et/ou de textures provoqués par le flux sanguin. Le suivi de la pose de la caméra est alors perdu et il n'est pas possible d'afficher les éléments augmentés sur l'image captée par la caméra.

Des solutions ont été proposées pour la gestion des images-clés dans les zones non explorées ou les zones changeant d'apparence au fil du temps.

Une première solution, notamment utilisée dans les procédures cœlioscopiques, est d'ajouter manuellement des images-clés à la base de données pour compléter le modèle 3D à des angles de vues différents. Ces ajouts se font selon des critères visuels propres à l'utilisateur, qui estime la pertinence de l'image pour l'ajout à la base d'images-clés.

Cette solution est contraignante, notamment dans un cadre opératoire, car elle nécessite des interventions fréquentes de l'utilisateur via l'interface Homme-Machine (IHM) dédiée (écran tactile, clavier, souris, etc.) et dégradent l'expérience utilisateur. En outre, l'efficacité de cette solution dépend fortement de l'opérateur qui la prend en charge.

D'autres solutions ont cherché à automatiser la sélection de nouvelles images-clés de façon à soulager l'utilisateur de la tâche manuelle de sélection. Ces solutions proposées impliquent notamment la mise à jour automatique de la base d'images-clés par l'utilisation de différents critères de sélection.

Ces solutions ne sont toutefois pas optimales pour une utilisation dans un contexte chirurgical. En particulier, la gestion de la base de données est complexe et la sélection automatique consomme beaucoup de ressource matérielle (ressource processeur, graphique ou mémoire par exemple) et n'est pas compatible avec une utilisation en temps réel dans un contexte chirurgical.

Les inventeurs ont ainsi cherché à améliorer la gestion automatique de la base d'image-clés en définissant des critères pertinents et efficaces de sélection de nouvelles images-clés sans remettre en cause les performances globales du système.

L'article de Collins ET AL: "Augmented Reality Guided Laparoscopic Surgery of the Uterus",2020, décrit une méthode d'odométrie basée sur un flux vidéo.

### Objectifs de l'invention

L'invention vise à fournir un procédé et un dispositif de suivi en temps réel de la pose d'une caméra par rapport à un modèle 3D permettant une gestion automatisée d'une base d'images-clés du modèle 3D.

L'invention vise à fournir un procédé et un dispositif de suivi permettant une meilleure prise en compte de la pose de la caméra et de la netteté de l'image à ajouter dans la base d'images-clés.

L'invention vise à fournir un procédé et un dispositif de suivi permettant de décharger l'utilisateur de l'ajout de nouvelles images-clé.

L'invention vise à fournir un procédé et un dispositif de suivi permettant la gestion de la base d'images-clés sans impact sur le traitement du flux vidéo temps réel issu de la caméra.

### Exposé de l'invention

Pour ce faire, l'invention concerne un procédé de suivi en temps réel de la pose d'une caméra par rapport à un modèle 3D, ledit modèle 3D comprenant une base d'images-clés et une base de poses associées à chaque image-clé, chaque image-clé étant notamment caractérisée par des points de référence, ledit procédé comprenant un premier fil d'exécution comprenant :
- une étape de réception d'un flux vidéo de la caméra composé d'une pluralité d'images,
- une étape de mise en correspondance de points de référence de la dernière image reçue du flux vidéo, dite image courante, avec des points de référence d'une image-clé du modèle 3D par un algorithme de mise en correspondance,
- une étape d'estimation de la pose courante de la caméra à partir de l'image-clé, dite image-clé sélectionnée, comprenant le nombre le plus élevé de points de référence en commun avec l'image courante, par estimation du déplacement entre la pose de la caméra associée à l'image-clé sélectionnée issue de la base de poses et la pose courante de la caméra associée à l'image courante,
caractérisé en ce que le procédé comprend en outre :
- si le nombre de points de référence en commun entre l'image-clé sélectionnée et l'image courante est inférieur ou égal à un seuil prédéterminé, une étape d'incrémentation d'un compteur de perte de pose, ou
- si le nombre de points de référence en commun entre l'image-clé sélectionnée et l'image courante est supérieur au seuil prédéterminé, une étape de stockage de l'image courante du flux vidéo dans une mémoire tampon,
et en en ce que le procédé comprend en outre, si le compteur de perte de pose est supérieur ou égal à une valeur prédéterminée, un deuxième fil d'exécution comprenant :
- une étape d'analyse de la qualité de l'estimation de la pose de la caméra de l'image stockée dans la mémoire tampon,
- une étape d'analyse de la netteté de l'image stockée dans la mémoire tampon à partir de données représentatives du mouvement de la caméra,
- si la qualité de l'estimation de la pose de la caméra de l'image stockée et la netteté de l'image stockée sont conformes à des critères prédéterminés, une étape d'ajout de l'image stockée dans la mémoire tampon à la base d'images-clés, en tant que nouvelle image-clé, sinon une étape de suppression de l'image stockée dans la mémoire tampon.

Un procédé de suivi selon l'invention permet donc une gestion automatisée de la base d'images-clés pour le suivi de la pose de la caméra, en effectuant une sélection multicritère de nouvelles images-clés en partant d'images du flux vidéo provenant de la caméra. La gestion de la base d'images-clés est ainsi réalisée sans intervention manuelle ce qui permet de soulager l'utilisateur de cette tâche. La possibilité d'ajouter des images-clés au cours du procédé de suivi permet d'assurer le suivi selon n'importe quel angle de vue, en particulier des angles de vue non connus initialement dans le modèle 3D, en particulier des zones jamais vues par la caméra ou des zones changeant d'apparence au fil du temps.

Le modèle 3D est généré en amont de la phase de suivi par des méthodes de vision à partir d'images, par exemple une méthode de structure acquise à partir d'un mouvement, dite méthode SfM pour *Structure-from-Motion* en anglais. Les images obtenues par cette méthode peuvent constituer une partie statique de la base d'images-clés, qui ne peut pas être modifiée lors de l'exécution du procédé de suivi. Le modèle 3D est complété par des nouvelles images-clés via le procédé de suivi selon l'invention, ces nouvelles images clés formant une partie dynamique de la base d'images-clés, qui peut être modifiée. La base de poses est également mise à jour à chaque ajout de nouvelle image-clé pour ajouter la pose estimée de cette nouvelle image-clé.

L'automatisation de cette gestion permet d'améliorer la répétabilité du suivi de la pose de la caméra en rendant le processus indépendant de l'utilisateur.

En particulier, les critères de correspondance entre l'image courante et les images-clés de la base d'images-clés du modèle 3D, le critère d'analyse de la qualité de l'estimation de la pose de la caméra et le critère de netteté de l'image à partir de données représentatives du mouvement de la caméra permettent une sélection optimale de nouvelles images-clés compatible avec une utilisation temps réel.

Le principe est d'utiliser une image passée, qui est une ancienne image courante mise dans la mémoire tampon répondant à ces critères de sélection pour améliorer le suivi par l'image courante du flux vidéo lorsque la pose de la caméra est perdue du fait du manque d'images-clés suffisamment proches de l'image courante captée par la caméra. L'utilisation de cette image passée, qui répond à des critères de correspondance, permet de s' assurer d' avoir comme référence une image du flux vidéo qui a été considérée comme permettant le suivi de la pose de la caméra et sur laquelle le suivi courant peut s'ajuster.

Le modèle 3D ainsi complété peut permettre l'ajout, sur un affichage du flux vidéo, d'objets en réalité augmentée ajusté selon la pose de la caméra connue grâce au procédé de suivi. Par exemple, pour une application en cœlioscopie, une modélisation 3D d'un organe peut être affichée en réalité augmentée sur l'organe réel tel que capté par la caméra et tel qu'affiché sur un écran de visualisation. La mise à jour de la base d'images-clés permet de s'assurer que la pose de la caméra est correctement suivie pour que l'affichage de la modélisation 3D soit en permanence ajustée à l'image de l'organe réel. La modélisation 3D peut être complétée par des éléments invisibles sur le flux vidéo, comme la présence de tumeurs, etc.

Avantageusement et selon l'invention, le premier fil d'exécution et le deuxième fil d'exécution sont exécutés en parallèle.

Selon cet aspect de l'invention, les fils d'exécutions, aussi appelé processus ou *thread* en anglais ne s'impactent pas mutuellement. En particulier, la gestion de la base d'images-clés, gérée par le deuxième fil d'exécution dit fil de gestion de la base d'images-clés, n'a pas d'impact sur les performances du suivi en temps réel de la pose de la caméra, géré par le premier fil d'exécution dit fil de suivi.

Avantageusement et selon l'invention, le seuil prédéterminé est supérieur ou égal à cinquante.

Selon cet aspect de l'invention, la valeur du seuil prédéterminé permet de s'assurer que l'image stockée dans la mémoire tampon comprend un grand nombre de point de référence avec une image-clé afin de permettre un bon suivi de la pose de la caméra entre ces deux images. Dans d'autres variantes de l'invention, le seuil prédéterminé peut être inférieur à cinquante au risque de diminuer la qualité de l'estimation de la pose à mesure que la valeur du seuil est faible.

Avantageusement et selon l'invention, l'étape d'analyse de la qualité de l'estimation de la pose comprend au moins une des sous-étapes suivantes :
- une sous-étape de calcul de la couverture spatiale des points de référence,
- une sous-étape de calcul de l'erreur de l'estimation de la pose estimée entre les points de référence observés dans l'image stockée dans la mémoire tampon et les points de référence calculés à partir de l'image sélectionnée et de l'estimation de la pose.

Selon cet aspect de l'invention, ces sous-étapes permettent de s'assurer de la qualité de l'estimation de la pose de la caméra pour la sélection de l'image stockée dans la mémoire tampon en tant que nouvelle image-clé. La qualité de l'estimation de la pose se définit plus précisément comme la qualité des paramètres calculés de l'estimation de la pose par rapport aux correspondances des points de référence dans l'image stockée dans la mémoire tampon et l'image-clé la plus proche. Notamment, l'erreur d'estimation de la pose permet de déterminer cette qualité d'estimation de la pose en s'assurant que l'erreur d'estimation des paramètres de la pose restent faibles par rapport aux poses connues attribuées aux images-clé de la base d'images-clés. Le calcul de l'erreur d'estimation de la pose est calculé par reprojection calculée entre les points observés dans l'image courante et les points prédits par le transfert à partir des images-clés et de l'estimation de la pose.

Le calcul de l'erreur d'estimation de la pose peut par exemple être un calcul de l'erreur quadratique moyenne de la pose ou de la racine de l'erreur quadratique moyenne de la pose.

Avantageusement et selon l'invention, l'étape d'analyse de la netteté de l'image comprend une sous-étape de calcul du mouvement de points de référence, pour le calcul de la vitesse et/ou l'accélération et/ou l'à-coup desdits points de référence.

Selon cet aspect de l'invention, la netteté de l'image est prise en compte pour la sélection de l'image stockée dans la mémoire tampon comme nouvelle image-clé, en se basant sur le mouvement de la caméra. L'objectif est de supprimer les images qui ne sont pas suffisamment informatives pour être intégrées dans la base d'images-clés.

L'à-coup, aussi appelé secousse ou suraccélération ou *jerk ou jolt* en anglais, est la dérivée de l'accélération par rapport au temps. L'accélération est elle-même la dérivée de la vitesse par rapport au temps et la vitesse est la dérivée de la position par rapport au temps.

Avantageusement et selon l'invention, la base d'images-clés comprend une partie statique comprenant des images-clés statiques prédéfinies et une partie dynamique dans laquelle sont stockées les nouvelles images-clés ajoutées à l'étape d'ajout de l'image stockée dans la mémoire tampon à la base d'images-clés.

Selon cet aspect de l'invention, la conservation des images-clés statiques de la partie statique de la base d'images-clés permet de limiter les dérives sur l'estimation de la pose. En particulier, l'absence d'images-clés statiques provoque un risque de dérive de l'estimation de la pose, c'est-à-dire une dégradation progressive de l'estimation de la pose à partir des images-clés.

Avantageusement et selon l'invention, le procédé comprend une étape de mesure pour chaque image-clé de la durée depuis la dernière mise en correspondance de ladite image-clé avec une image du flux vidéo, et en ce que, si le nombre de l'image-clé est supérieur ou égal à un nombre limite d'images-clés prédéterminé, l'étape d'ajout de l'image stockée dans la mémoire tampon à la base d'images-clés comprend une sous-étape de suppression de l'image-clé dont la durée depuis la dernière mise en correspondance est la plus élevée.

Selon cet aspect de l'invention, la mise en place d'une limite d'images-clés dans la base d'images-clés permet de s'assurer que la mise en correspondance des images-clés avec le flux vidéo n'impacte pas trop fortement le temps de calcul de la machine exécutant le procédé, en particulier pour conserver l'aspect temps réel du procédé de suivi. Si la base d'images-clés comprend des images-clés dites statiques dans la partie statique de la base d'images-clés, ces images-clés ne sont pas supprimées si la limite d'images-clés est atteinte et c'est une image-clé non-statique ou image-clé dynamique qui est supprimée, c'est-à-dire une image-clé comprise dans la partie dynamique de la base d'images-clés, en particulier une image-clé qui a été ajoutée antérieurement lors du déroulement du procédé de suivi. Autrement dit, la gestion de la base d'images-clés peut s'effectuer uniquement dans une partie dynamique de la base d'images-clés qui comprend des images-clés pouvant être supprimées si besoin et ne pas impacter une partie statique de la base d'images-clés comprenant des images statiques qui ne peuvent pas être supprimées par ce procédé de suivi.

Ce nombre limite d'images-clés peut être par exemple entre vingt et cinquante pour une application de suivi de la pose d'un endoscope dans une opération cœlioscopique, en particulier environ trente images pour un bon compromis entre temps de calcul raisonnable et robustesse du suivi de la pose de la caméra. Le nombre limite d'images-clés est sélectionné comme un compromis entre d'une part la précision et la robustesse du procédé de suivi, et d'autre part la vitesse de calcul et le nombre d'images traitées par seconde. Le nombre limite d'images-clés dépend également du matériel utilisé et de ses ressources.

L'invention concerne également un dispositif de suivi en temps réel de la pose d'une caméra par rapport à un modèle 3D, ledit modèle 3D comprenant une base d'images-clés et une base de poses associées à chaque image-clé, chaque image-clé étant notamment caractérisée par des points de référence, ledit dispositif comprenant un premier module de suivi comprenant :
- un sous-module de réception d'un flux vidéo de la caméra composé d'une pluralité d'images,
- un sous-module de mise en correspondance de points de référence de la dernière image reçue du flux vidéo, dite image courante, avec des points de référence d'une image-clé du modèle 3D par un algorithme de mise en correspondance,
- un sous-module d'estimation de la pose courante de la caméra à partir de l'image-clé, dite image-clé sélectionnée, comprenant le nombre le plus élevé de points de référence en commun avec l'image courante, par estimation du déplacement entre la pose de la caméra associée à l'image-clé sélectionnée issue de la base de poses et la pose courante de la caméra associée à l'image courante,
caractérisé en ce que le dispositif comprend en outre un module de gestion de base d'images-clés comprenant, :
- un sous-module comprenant un compteur de perte de pose incrémenté si le nombre de points de référence en commun entre l'image-clé sélectionnée et l'image courante est inférieur ou égal à un seuil prédéterminé
- un sous-module de transfert de l'image courante du flux vidéo vers une mémoire tampon du dispositif si le nombre de points de référence en commun entre l'image-clé sélectionnée et l'image courante est supérieur au seuil prédéterminé,
- un sous-module de comparaison de la valeur du compteur de perte de pose avec une valeur prédéterminée,
- un sous-module d'analyse de la qualité de l'estimation de la pose de la caméra de l'image stockée dans la mémoire tampon,
- un sous-module d'analyse de la netteté de l'image stockée dans la mémoire tampon à partir de données représentatives du mouvement de la caméra,
- un sous-module de gestion de la mémoire tampon, configuré pour ajouter l'image stockée dans la base d'images-clés si la qualité de l'estimation de la pose de la caméra de l'image stockée et la netteté de l'image stockée sont conformes à des critères prédéterminés, et pour supprimer l'image stockée dans la mémoire tampon sinon.

Un module peut par exemple consister en un dispositif informatique tel qu'un ordinateur, d'un ensemble de dispositifs informatiques, d'un composant électronique ou d'un ensemble de composants électroniques, ou par exemple d'un programme informatique, d'un ensemble de programmes informatiques, d'une librairie d'un programme informatique ou d'une fonction d'un programme informatique exécuté par un dispositif informatique tel qu'un ordinateur, un ensemble de dispositifs informatiques, un composant électronique ou un ensemble de composants électroniques.

Avantageusement, le dispositif de suivi selon l'invention est configuré pour mettre en œuvre le procédé de suivi selon l'invention.

Avantageusement, le procédé de suivi selon l'invention est mis en œuvre par un dispositif de suivi selon l'invention.

L'invention concerne également un produit programme d'ordinateur de suivi en temps réel de la pose d'une caméra par rapport à un modèle 3D, ledit modèle 3D comprenant une base d'images-clés et une base de poses associées à chaque image-clé, chaque image-clé étant notamment caractérisée par des points de référence, ledit produit programme d'ordinateur comprenant des instructions de code de programme pour l'exécution, lorsque ledit produit programme d'ordinateur est exécuté sur un ordinateur, des étapes d'un procédé comprenant un premier fil d'exécution comprenant :
- une étape de réception d'un flux vidéo de la caméra composé d'une pluralité d'images,
- une étape de mise en correspondance de points de référence de la dernière image reçue du flux vidéo, dite image courante, avec des points de référence d'une image-clé du modèle 3D par un algorithme de mise en correspondance,
- une étape d'estimation de la pose courante de la caméra à partir de l'image-clé, dite image-clé sélectionnée, comprenant le nombre le plus élevé de points de référence en commun avec l'image courante, par estimation du déplacement entre la pose de la caméra associée à l'image-clé sélectionnée issue de la base de poses et la pose courante de la caméra associée à l'image courante, caractérisé
en ce que le procédé comprend en outre, :
- si le nombre de points de référence en commun entre l'image-clé sélectionnée et l'image courante est inférieur ou égal à un seuil prédéterminé, une étape d'incrémentation d'un compteur de perte de pose, ou
- si le nombre de points de référence en commun entre l'image-clé sélectionnée et l'image courante est supérieur au seuil prédéterminé, une étape de stockage de l'image courante du flux vidéo dans une mémoire tampon,
et en en ce que le procédé comprend en outre, si le compteur de perte de pose est supérieur ou égal à une valeur prédéterminée, un deuxième fil d'exécution comprenant :
- une étape d'analyse de la qualité de l'estimation de la pose de la caméra de l'image stockée dans la mémoire tampon,
- une étape d'analyse de la netteté de l'image stockée dans la mémoire tampon à partir de données représentatives du mouvement de la caméra,
- si la qualité de l'estimation de la pose de la caméra de l'image stockée et la netteté de l'image stockée sont conformes à des critères prédéterminés, une étape d'ajout de l'image stockée dans la mémoire tampon à la base d'images-clés, en tant que nouvelle image-clé, sinon une étape de suppression de l'image stockée dans la mémoire tampon.

Avantageusement, le produit programme d'ordinateur selon l'invention est configuré pour mettre en œuvre le procédé de suivi selon l'invention.

Avantageusement, le procédé de suivi selon l'invention est mis en œuvre par un produit programme d'ordinateur selon l'invention.

L'invention concerne également un système d'imagerie endoscopique caractérisé en ce qu'il comprend un endoscope configuré pour capter un flux vidéo, un dispositif de suivi selon l'invention configuré pour le suivi de la pose de l'endoscope, et un écran de visualisation configuré pour afficher des images acquises par l'endoscope et des informations supplémentaires fournies par l'unité de traitement en fonction de la pose de l'endoscope par rapport au modèle 3D.

De préférence, le système est utilisé pour l'imagerie cœlioscopique, thoracoscopique ou pelvioscopique.

L'invention concerne également un procédé de suivi, un dispositif de suivi et un système endoscopique caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système d'imagerie cœlioscopique selon un mode de réalisation de l'invention,
[Fig. 2] est une représentation schématique des étapes d'un procédé de suivi selon un mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

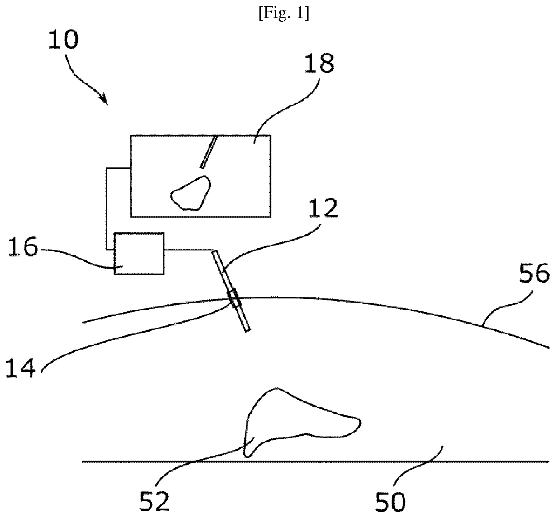

La figure 1 représente schématiquement un système 10 d'imagerie cœlioscopique selon un mode de réalisation de l'invention. L'objectif du système est de permettre d'acquérir et diffuser des images prises dans une cavité 50 du corps du patient, ici une cavité de l'abdomen d'un patient (ou cavité 50 abdominale), notamment dans le cadre d'une procédure cœlioscopique, par exemple une chirurgie cœlioscopique. L'opération de chirurgie cœlioscopique peut par exemple être destinée à l'intervention sur un organe 52 cible.

Pour ce faire, le système 10 comprend un dispositif de suivi selon un mode de réalisation de l'invention, comprenant notamment un endoscope 12 configuré pour acquérir des images de la cavité 50 abdominale du patient. L'endoscope 12 est agencé dans la cavité 50 abdominale du patient grâce à un trocart 14 permettant à l'endoscope de traverser la paroi 56 abdominale. L'endoscope utilisé dans le cadre d'une opération cœlioscopique est couramment appelé cœlioscope ou laparoscope.

Le dispositif de suivi comprend plusieurs modules permettant de mettre en œuvre un procédé selon l'invention, réunis ici dans une unité 16 de traitement. L'unité 16 de traitement est par exemple un ordinateur ou une carte électronique comprenant un processeur, par exemple un processeur dédié au traitement d'images du procédé selon l'invention ou bien un processeur généraliste configuré pour, parmi plusieurs fonctions, exécuter notamment des instructions de programme pour l'exécution des étapes du procédé selon l'invention.

Les images acquises de l'endoscope 12 sont affichées sur un écran 18 de visualisation destiné au personnel médical. Les images acquises peuvent être augmentées, c'est-à-dire comprendre des informations supplémentaires ajoutés par le système d'imagerie cœlioscopique, qui peuvent provenir du dispositif de suivi ou d'autres dispositifs.

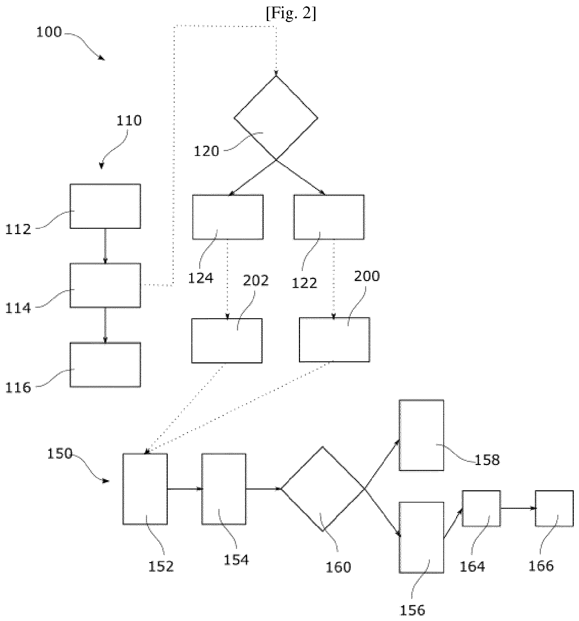

Un procédé 100 de suivi selon un mode de réalisation de l'invention comprend plusieurs étapes représentées en référence avec la figure 2.

Le procédé 100 permet le suivi en temps réel de la pose d'une caméra par rapport à un modèle 3D. Le modèle 3D comprend une base d'images-clés qui permet de former une synthèse d'une scène modélisée par le modèle correspondant à une scène réelle dans laquelle se déplace la caméra. Chaque image-clé est notamment caractérisée par des points de référence permettant de faire la correspondance entre la scène virtuelle du modèle 3D et la scène réelle captée par la caméra, ces points de référence permettant ainsi de déduire la pose de la caméra.

Le modèle 3D comprend également une base de poses associant à chaque image-clé la pose de la caméra lors de la prise de ladite image-clé. Cette base de poses permet d'associer les images-clés l'une à l'autre par leur pose qui s'exprime dans un repère commun. L'estimation d'un changement de pose se fait par estimation du déplacement et/ou de la rotation en fonction de ce repère commun.

Le procédé comprenant deux fils d'exécution pouvant être exécutés en parallèle, en particulier premier fil 110 d'exécution.

Le premier fil 110 d'exécution comprend une étape 112 de réception d'un flux vidéo de la caméra composé d'une pluralité d'images. La caméra est par exemple un endoscope filmant une cavité d'un patient.

Le premier fil 110 d'exécution comprend ensuite une étape 114 de mise en correspondance de points de référence de la dernière image reçue du flux vidéo, dite image courante, avec des points de référence d'une image-clé du modèle 3D par un algorithme de mise en correspondance. Cette étape permet de vérifier la correspondance de l'image courante avec une des images-clés du modèle 3D.

Le premier fil 110 d'exécution comprend ensuite une étape 116 d'estimation de la pose courante de la caméra à partir de l'image-clé, dite image-clé sélectionnée, comprenant le nombre le plus élevé de points de référence en commun avec l'image courante. La correspondance entre l'image courante et l'image-clé permet de déterminer que la caméra a une pose proche d'une pose de la caméra ayant permis d'obtenir ladite image-clé sélectionnée, et donc d'en déduire la pose de la caméra lors de la prise de l'image courante, par estimation du déplacement entre la pose de la caméra associée à l'image-clé sélectionnée issue de la base de poses et la pose courante de la caméra associée à l'image courante. En particulier, la pose est estimée par estimation de paramètres de la pose, par exemple des paramètres de rotation et de translation de la pose courante exprimés en fonction d'une pose de référence, c'est-à-dire dans ce contexte la pose associée à l'image-clé sélectionnée.

En pratique, la comparaison de l'image en cours avec les images-clés de la base d'images-clés est effectuée via un prétraitement de l'image (par exemple extraction de canal de couleur selon l'application, application de flou gaussien, redimensionnement de l'image, etc.) permettant d'en extraire facilement les points de référence grâce par exemple à un détecteur de type à transformation de caractéristiques visuelles invariantes à l'échelle, plus connu sous le nom de détecteur SIFT pour *Scale-Invariant Feature Transform* en anglais. Les points de référence sont ensuite comparés par une méthode de comparaison, par exemple par un algorithme de mise en correspondance, en particulier un algorithme de correspondance par force brute ou BFM pour *Brute Force Matching* en anglais.

L'estimation de la pose s'effectue ensuite à partir de l'image la plus pertinente, l'image sélectionnée, par exemple par un estimateur robuste, en particulier par une projection à n points couramment appelée PnP pour *Perspective-n-Point* en anglais, notamment de type PnP RANSAC utilisant la méthode itérative d'estimation de paramètres RANSAC pour *RANdom SAmple Consensus* en anglais.

Lorsque l'estimation de la pose est suffisamment fiable, le dispositif de suivi peut augmenter l'image du flux vidéo par réalité augmentée.

Le procédé comprend des étapes inclues ou non dans le premier fil d'exécution qui se basent sur une étape 120 de comparaison du nombre de points de référence en commun entre l'image-clé sélectionnée et l'image courante. Ces étapes peuvent être mises en œuvre à partir des mises en correspondance entre l'image courante et les images-clés obtenues à l'étape 114 de mise en correspondance.

Si le nombre de points de référence en commun entre l'image-clé sélectionnée et l'image courante est supérieur à un seuil prédéterminé, de préférence compris entre 20 et 100, par exemple cinquante, le procédé comprend une étape 122 de stockage de l'image courante dans une mémoire 200 tampon. Cette étape permet le traitement de l'image courante en dehors du premier fil 110 d'exécution, en conservant l'image pendant que le flux vidéo fourni à l'unité de traitement de nouvelles images captées par la caméra.

Si le nombre de points de référence en commun entre l'image-clé sélectionnée et l'image courante est inférieur ou égal au seuil prédéterminé, le procédé comprend une étape 124 d'incrémentation d'un compteur 202 de perte de pose est exécutée. Ce compteur permet de détecter une perte de pose de la caméra, lorsqu'aucune image-clé de la base d'images-clés ne permet d'estimer la pose de la caméra. Lorsque la pose de la caméra est perdue, il n'est plus possible d'afficher des informations supplémentaires par réalité augmentée.

Si le compteur de perte de pose est supérieur ou égal à une valeur prédéterminée, un deuxième fil 150 d'exécution du procédé est mis en œuvre.

Ce deuxième fil 150 d'exécution a pour objectif de gérer la base d'images-clés, en particulier d'ajouter des nouvelles images à la base d'images-clés si celles-ci permettent d'améliorer le suivi de la caméra, notamment dans des zones qui n'ont pas ou peu été captées précédemment par la caméra ou qui ont changé d'apparence au fil du temps, et pour lesquelles le modèle 3D n'a pas suffisamment d'images-clés.

Le deuxième 150 fil d'exécution comprend une étape 152 d'analyse de la qualité de l'estimation de la pose de la caméra de l'image stockée dans la mémoire tampon.

En particulier, l'étape 152 d'analyse de la qualité de l'estimation de la pose comprend au moins une des sous-étapes suivantes :
- une sous-étape de calcul de la couverture spatiale des points de référence,
- une sous-étape de calcul de l'erreur de l'estimation de la pose appelée aussi erreur de reprojection, par exemple par calcul de l'erreur quadratique moyenne de la pose ou de la racine de l'erreur quadratique moyenne de la pose. Cette erreur est quantifiable lors de l'estimation de la pose décrite plus haut, lors de l'application de l'algorithme de type PnP, notamment PnP RANSAC. L'erreur quadratique moyenne est notamment appelée MSE pour *Mean Squared Error* en anglais et la racine de l'erreur quadratique moyenne est notamment appelée RMSE pour *Root Mean Square error* en anglais.

Le deuxième 150 fil d'exécution comprend ensuite une étape 154 d'analyse de la netteté de l'image stockée dans la mémoire tampon à partir de données représentatives du mouvement de la caméra. La netteté de l'image est par exemple estimée en fonction de données représentatives de la position, du déplacement, de la vitesse, de l'accélération et/ou de l'à-coup de la caméra, ce qui permet de s'assurer de la conservation d'une image de bonne qualité pour l'éventuel ajout dans la base d'images-clés. En particulier, l'étape 154 d'analyse de la netteté de l'image comprend une sous-étape de calcul du mouvement de points de référence, pour le calcul de la vitesse et/ou l'accélération et/ou l'à-coup desdits points de référence par rapport à aux points de référence de l'image clé sélectionnée. L'analyse de la netteté de l'image stockée dans la mémoire tampon peut être complétée par un calcul de la variance du Laplacien pour valider l'analyse.

Si la qualité de l'estimation de la pose de la caméra de l'image stockée et la netteté de l'image stockée sont conformes à des critères prédéterminés, vérifiée dans une étape 160 de vérification de la pose et de la netteté, le deuxième 150 fil d'exécution comprend ensuite une étape 156 d'ajout de l'image stockée dans la mémoire tampon à la base d'images-clés, en tant que nouvelle image-clé, sinon une étape 158 de suppression de l'image stockée dans la mémoire tampon.

Cette étape d'ajout permet d'utiliser l'image stockée dans la mémoire tampon, qui est une image du passé, pour améliorer le suivi des prochaines poses de la caméra en l'ajoutant dans la base d'images-clés si le suivi de la pose est perdu faute d'images-clés suffisamment proches de l'image courante du flux vidéo capté par la caméra. La base de poses est également mise à jour pour conserver l'information de pose associée à la nouvelle image-clé.

Pour des raisons de performances globales du procédé, le procédé 100 de suivi peut comprendre également une étape 164 de mesure pour chaque image-clé de la durée depuis la dernière mise en correspondance de ladite image-clé avec une image du flux vidéo, et, si le nombre de l'image-clé est supérieur ou égal à un nombre limite prédéterminé, l'étape d'ajout de l'image stockée dans la mémoire tampon à la base d'images-clé comprend une sous-étape 166 de suppression de l'image-clé dont la durée depuis la dernière mise en correspondance est la plus élevée.

L'invention ne se limite pas au mode de réalisation décrit. En particulier, l'invention est applicable à tout type de système d'imagerie endoscopique dans le cadre d'une endoscopie, par exemple dans la cavité thoracique ou pelvienne, ainsi que plus généralement à tout système utilisant la réalité augmentée et nécessitant le suivi de la pose d'une caméra pour l'affichage d'un modèle 3D sur un flux vidéo réel capté par la caméra.

## Revendications

1. Procédé de suivi en temps réel de la pose d'une caméra par rapport à un modèle 3D, ledit modèle 3D comprenant une base d'images-clés et une base de poses associées à chaque image-clé, chaque image-clé étant notamment **caractérisée par** des points de référence, ledit procédé comprenant un premier fil (110) d'exécution comprenant :
- une étape (112) de réception d'un flux vidéo de la caméra composé d'une pluralité d'images,
- une étape (114) de mise en correspondance de points de référence de la dernière image reçue du flux vidéo, dite image courante, avec des points de référence d'une image-clé du modèle 3D par un algorithme de mise en correspondance,
- une étape (116) d'estimation de la pose courante de la caméra à partir de l'image-clé, dite image-clé sélectionnée, comprenant le nombre le plus élevé de points de référence en commun avec l'image courante, par estimation du déplacement entre la pose de la caméra associée à l'image-clé sélectionnée issue de la base de poses et la pose courante de la caméra associée à l'image courante,
**caractérisé en ce que** le procédé comprend en outre :
- si le nombre de points de référence en commun entre l'image-clé sélectionnée et l'image courante est inférieur ou égal à un seuil prédéterminé, une étape (124) d'incrémentation d'un compteur de perte de pose, ou
- si le nombre de points de référence en commun entre l'image-clé sélectionnée et l'image courante est supérieur au seuil prédéterminé, une étape (122) de stockage de l'image courante du flux vidéo dans une mémoire tampon,
et **en ce que** le procédé comprend en outre, si le compteur de perte de pose est supérieur ou égal à une valeur prédéterminée, un deuxième fil (150) d'exécution comprenant :
- une étape d'analyse (152) de la qualité de l'estimation de la pose de la caméra de l'image stockée dans la mémoire tampon,
- une étape d'analyse (154) de la netteté de l'image stockée dans la mémoire tampon à partir de données représentatives du mouvement de la caméra,
- si la qualité de l'estimation de la pose de la caméra de l'image stockée et la netteté de l'image stockée sont conformes à des critères prédéterminés, une étape (156) d'ajout de l'image stockée dans la mémoire tampon à la base d'images-clés, en tant que nouvelle image-clé, sinon une étape (158) de suppression de l'image stockée dans la mémoire tampon.

2. Procédé de suivi selon la revendication 1 **caractérisé en ce que** le premier fil d'exécution et le deuxième fil d'exécution sont exécutés en parallèle.

3. Procédé de suivi selon l'une des revendications 1 ou 2, **caractérisé en ce que** le seuil prédéterminé est supérieur ou égal à cinquante.

4. Procédé de suivi selon l'une des revendications 1 à 3, **caractérisé en ce que** l'étape d'analyse de la qualité de l'estimation de la pose comprend au moins une des sous-étapes suivantes :
- une sous-étape de calcul de la couverture spatiale des points de référence,
- une sous-étape de calcul de l'erreur de l'estimation de la pose estimée entre les points de référence observés dans l'image stockée dans la mémoire tampon et les points de référence calculés à partir de l'image sélectionnée et de l'estimation de la pose.

5. Procédé de suivi selon l'une des revendications 1 à 4, **caractérisé en ce que** l'étape d'analyse de la netteté de l'image comprend une sous-étape de calcul du mouvement de points de référence, pour le calcul de la vitesse et/ou l'accélération et/ou l'à-coup desdits points de référence.

6. Procédé de suivi selon l'une des revendications 1 à 5, **caractérisé en ce que** la base d'images-clés comprend une partie statique comprenant des images-clés statiques prédéfinies et une partie dynamique dans laquelle sont stockées les nouvelles images-clés ajoutées à l'étape d'ajout de l'image stockée dans la mémoire tampon à la base d'images-clés.

7. Procédé de suivi selon l'une des revendications 1 à 6, **caractérisé en ce qu'**il comprend une étape de mesure pour chaque image-clé de la durée depuis la dernière mise en correspondance de ladite image-clé avec une image du flux vidéo, et **en ce que**, si le nombre de l'image-clé est supérieur ou égal à un nombre limite prédéterminé, l'étape d' ajout de l'image stockée dans la mémoire tampon à la base d'images-clés comprend une sous-étape de suppression de l'image-clé dont la durée depuis la dernière mise en correspondance est la plus élevée.

8. Dispositif de suivi en temps réel de la pose d'une caméra par rapport à un modèle 3D, ledit modèle 3D comprenant une base d'images-clés et une base de poses associées à chaque image-clé, chaque image-clé étant notamment **caractérisée par** des points de référence, ledit dispositif comprenant un premier module de suivi comprenant :
- un sous-module de réception d'un flux vidéo de la caméra composé d'une pluralité d'images,
- un sous-module de mise en correspondance de points de référence de la dernière image reçue du flux vidéo, dite image courante, avec des points de référence d'une image-clé du modèle 3D par un algorithme de mise en correspondance,
- un sous-module d'estimation de la pose courante de la caméra à partir de l'image-clé, dite image-clé sélectionnée, comprenant le nombre le plus élevé de points de référence en commun avec l'image courante, par estimation du déplacement entre la pose de la caméra associée à l'image-clé sélectionnée issue de la base de poses et la pose courante de la caméra associée à l'image courante,
**caractérisé en ce que** le dispositif comprend en outre un module de gestion de la base d'images-clés comprenant, :
- un sous-module comprenant un compteur de perte de pose incrémenté si le nombre de points de référence en commun entre l'image-clé sélectionnée et l'image courante est inférieur ou égal à un seuil prédéterminé,
- un sous-module de transfert de l'image courante du flux vidéo vers une mémoire tampon du dispositif si le nombre de points de référence en commun entre l'image-clé sélectionnée et l'image courante est supérieur au seuil prédéterminé,
- un sous-module de comparaison de la valeur du compteur de perte de pose avec une valeur prédéterminée,
- un sous-module d'analyse de la qualité de l'estimation de la pose de la caméra de l'image stockée dans la mémoire tampon,
- un sous-module d'analyse de la netteté de l'image stockée dans la mémoire tampon à partir de données représentatives du mouvement de la caméra,
- un sous-module de gestion de la mémoire tampon, configuré pour ajouter l'image stockée dans la base d'images-clés si la qualité de l'estimation de la pose de la caméra de l'image stockée et la netteté de l'image stockée sont conformes à des critères prédéterminés, et pour supprimer l'image stockée dans la mémoire tampon sinon.

9. Produit programme d'ordinateur de suivi en temps réel de la pose d'une caméra par rapport à un modèle 3D, ledit modèle 3D comprenant une base d'images-clés et une base de poses associées à chaque image-clé, chaque image-clé étant notamment **caractérisée par** des points de référence, ledit produit programme d'ordinateur comprenant des instructions de code de programme pour l'exécution, lorsque ledit produit programme d'ordinateur est exécuté sur un ordinateur, des étapes d'un procédé comprenant un premier fil d'exécution comprenant :
- une étape de réception d'un flux vidéo de la caméra composé d'une pluralité d'images,
- une étape de mise en correspondance de points de référence de la dernière image reçue du flux vidéo, dite image courante, avec des points de référence d'une image-clé du modèle 3D par un algorithme de mise en correspondance,
- une étape d'estimation de la pose courante de la caméra à partir de l'image-clé, dite image-clé sélectionnée, comprenant le nombre le plus élevé de points de référence en commun avec l'image courante, par estimation du déplacement entre la pose de la caméra associée à l'image-clé sélectionnée issue de la base de poses et la pose courante de la caméra associée à l'image courante,
**caractérisé en ce que** le procédé comprend en outre :
- si le nombre de points de référence en commun entre l'image-clé sélectionnée et l'image courante est inférieur ou égal à un seuil prédéterminé, une étape d'incrémentation d'un compteur de perte de pose, ou
- si le nombre de points de référence en commun entre l'image-clé sélectionnée et l'image courante est supérieur au seuil prédéterminé, une étape de stockage de l'image courante du flux vidéo dans une mémoire tampon,
et en **en ce que** le procédé comprend en outre, si le compteur de perte de pose est supérieur ou égal à une valeur prédéterminée, un deuxième fil d'exécution comprenant :
- une étape d'analyse de la qualité de l'estimation de la pose de la caméra de l'image stockée dans la mémoire tampon,
- une étape d'analyse de la netteté de l'image stockée dans la mémoire tampon à partir de données représentatives du mouvement de la caméra,
- si la qualité de l'estimation de la pose de la caméra de l'image stockée et la netteté de l'image stockée sont conformes à des critères prédéterminés, une étape d'ajout de l'image stockée dans la mémoire tampon à la base d'images-clés, en tant que nouvelle image-clé, sinon une étape de suppression de l'image stockée dans la mémoire tampon.

10. Système d'imagerie endoscopique **caractérisé en ce qu'**il comprend un endoscope configuré pour capter un flux vidéo, un dispositif de suivi selon la revendication 8 configuré pour le suivi de la pose de l'endoscope, et un écran de visualisation configuré pour afficher des images acquises par l'endoscope et des informations supplémentaires fournies par l'unité de traitement en fonction de la pose de l'endoscope par rapport au modèle 3D.

## Patentansprüche

1. Verfahren zur Echtzeitverfolgung der Positionierung einer Kamera in Bezug auf ein 3D-Modell, worin das 3D-Modell eine Keyframe-Basis und eine Basis von Positionierungen umfasst, die jedem Keyframe zugeordnet sind, worin jeder Keyframe insbesondere durch Referenzpunkte gekennzeichnet ist, wobei das Verfahren einen ersten Ausführungsstrang (110) umfasst, der umfasst:
- einen Schritt (112) zum Empfangen eines Videostroms von der Kamera, der aus mehreren Bildern besteht,
- einen Schritt (114) zum Zuordnen von Referenzpunkten des zuletzt empfangenen Bildes des Videostroms, das als aktuelles Bild bezeichnet wird, auf Referenzpunkte eines Keyframes des 3D-Modells durch einen Zuordnungsalgorithmus,
- einen Schritt (116) zum Schätzen der aktuellen Position der Kamera aus dem Keyframe, der als ausgewähltes Keyframe bezeichnet wird und die höchste Anzahl von Referenzpunkten aufweist, die mit dem aktuellen Bild gemeinsam sind, indem die Verschiebung zwischen der Position der Kamera, die mit dem ausgewählten Keyframe verbunden ist, von der Positionsbasis und der aktuellen Position der Kamera, die mit dem aktuellen Bild verbunden ist, geschätzt wird,
**dadurch gekennzeichnet, dass** das Verfahren ferner umfasst:
- einen Schritt (124) zum Inkrementieren eines Platzierungsverlustzählers, wenn die Anzahl der gemeinsamen Referenzpunkte zwischen dem ausgewählten Keyframe und dem aktuellen Bild kleiner oder gleich einem bestimmten Schwellenwert ist, , oder
- einen Schritt (122) zum Speichern des aktuellen Bildes des Videostroms in einem Pufferspeicher, wenn die Anzahl der gemeinsamen Referenzpunkte zwischen dem ausgewählten Keyframe und dem aktuellen Bild höher als der vorgegebene Schwellenwert ist,
und darin, dass, wenn der Platzierungsverlustzähler höher oder gleich einem bestimmten Wert ist, das Verfahren ferner einen zweiten Ausführungsstrang (150) umfasst, der umfasst:
- einen Schritt (152) zum Analysieren der Qualität der Schätzung der Position der Kamera anhand des im Pufferspeicher gespeicherten Bildes,
- einen Schritt (154) zum Analysieren der Schärfe des im Pufferspeicher gespeicherten Bildes anhand von Daten, die für die Bewegung der Kamera repräsentativ sind,
- einen Schritt (156) des Hinzufügens des im Pufferspeicher gespeicherten Bildes zur Keyframe-Basis als neuen Keyframe, wenn die Qualität der Schätzung der Position der Kamera aus dem gespeicherten Bild und die Schärfe des gespeicherten Bildes bestimmten Kriterien entsprechen, andernfalls einen Schritt (158) des Entfernens des im Pufferspeicher gespeicherten Bildes.

2. Verfahren zur Verfolgung nach Anspruch 1, **dadurch gekennzeichnet, dass** der erste Ausführungsstrang und der zweite Ausführungsstrang parallel ausgeführt werden.

3. Verfahren zur Verfolgung nach einem der Ansprüche 1 oder 2, **dadurch gekennzeichnet, dass** der bestimmte Schwellenwert größer oder gleich fünfzig ist.

4. Verfahren zur Verfolgung nach einem der Ansprüche 1 bis 3, **dadurch gekennzeichnet, dass** der Schritt des Analysierens der Qualität der Schätzung der Platzierung mindestens einen der Unterschritte umfasst:
- einen Teilschritt zum Berechnen der räumlichen Abdeckung der Referenzpunkte,
- einen Teilschritt zum Berechnen des Fehlers in der Schätzung der geschätzten Platzierung zwischen den Referenzpunkten, die in dem im Pufferspeicher gespeicherten Bild beobachtet werden, und den Referenzpunkten, die aus dem ausgewählten Bild und der Schätzung der Platzierung berechnet werden.

5. Verfahren zur Verfolgung nach einem der Ansprüche 1 bis 4, **dadurch gekennzeichnet, dass** der Schritt des Analysierens der Schärfe des Bildes einen Teilschritt des Berechnens der Bewegung von Referenzpunkten zum Berechnen der Geschwindigkeit und/oder der Beschleunigung und/oder der Erschütterung der Referenzpunkte umfasst.

6. Verfahren zur Verfolgung nach einem der Ansprüche 1 bis 5, **dadurch gekennzeichnet, dass** die Keyframe-Basis einen statischen Teil mit vordefinierten statischen Keyframes und einen dynamischen Teil umfasst, der die neuen Keyframes speichert, die in dem Schritt des Hinzufügens des in dem Pufferspeicher gespeicherten Bildes zu der Keyframe-Basis hinzugefügt wurden.

7. Verfahren zur Verfolgung nach einem der Ansprüche 1 bis 6, **dadurch gekennzeichnet, dass** es einen Schritt umfasst, bei dem für jeden Keyframe die Dauer seit der letzten Zuordnung des Keyframes zu einem Bild des Videostroms gemessen wird, und darin, dass, wenn die Anzahl des Keyframes größer oder gleich einer bestimmten Grenzzahl ist, der Schritt des Hinzufügens des im Pufferspeicher gespeicherten Bildes zur Keyframe-Basis einen Unterschritt des Entfernens des Keyframes mit der längsten Dauer seit der letzten Zuordnung umfasst.

8. Vorrichtung zur Echtzeitverfolgung der Positionierung einer Kamera in Bezug auf ein 3D-Modell, worin das 3D-Modell eine Keyframe-Basis und eine Basis von Positionierungen umfasst, die jedem Keyframe zugeordnet sind, wobei jeder Keyframe insbesondere durch Referenzpunkte gekennzeichnet ist, wobei die Vorrichtung ein erstes Verfolgungsmodul umfasst, das umfasst:
- ein Untermodul zum Empfangen eines Videostroms von der Kamera, der aus mehreren Bildern besteht,
- ein Untermodul zum Zuordnen von Referenzpunkten des zuletzt empfangenen Bildes des Videostroms, das als aktuelles Bild bezeichnet wird, mit Referenzpunkten eines Keyframes des 3D-Modells durch einen Zuordnungsalgorithmus,
- ein Untermodul zum Schätzen der aktuellen Position der Kamera anhand des Keyframes, der als ausgewählter Keyframe bezeichnet wird und die höchste Anzahl gemeinsamer Referenzpunkte mit dem aktuellen Bild aufweist, indem die Verschiebung zwischen der Position der Kamera, die mit dem ausgewählten Keyframe verbunden ist, und der aktuellen Position der Kamera, die mit dem aktuellen Bild verbunden ist, geschätzt wird,
**dadurch gekennzeichnet, dass** die Vorrichtung ferner ein Modul zum Verwalten der Keyframebasis umfasst, das umfasst:
- ein Untermodul, das einen Platzierungsverlustzähler umfasst, der erhöht wird, wenn die Anzahl der gemeinsamen Referenzpunkte zwischen dem ausgewählten Keyframe und dem aktuellen Bild kleiner oder gleich einem bestimmten Schwellenwert ist,
- ein Untermodul zum Übertragen des aktuellen Bildes des Videostroms in einen Pufferspeicher der Vorrichtung, wenn die Anzahl der gemeinsamen Referenzpunkte zwischen dem ausgewählten Keyframe und dem aktuellen Bild größer als der bestimmte Schwellenwert ist,
- ein Untermodul zum Vergleichen des Werts des Platzierungsverlustzählers mit einem bestimmten Wert,
- ein Untermodul zum Analysieren der Qualität der Schätzung der Platzierung der Kamera anhand des im Pufferspeicher gespeicherten Bildes,
- ein Untermodul zum Analysieren der Schärfe des im Pufferspeicher gespeicherten Bildes anhand von Daten, die für die Bewegung der Kamera repräsentativ sind,
- ein Untermodul zum Verwalten des Pufferspeichers, das so konfiguriert ist, das in der Keyframe-Basis gespeicherte Bild hinzuzufügen, wenn die Qualität der Schätzung der Position der Kamera anhand des gespeicherten Bildes und die Schärfe des gespeicherten Bildes vorgegebenen Kriterien entsprechen, und andernfalls das im Pufferspeicher gespeicherte Bild zu entfernen.

9. Computerprogrammprodukt zur Echtzeitverfolgung der Position einer Kamera in Bezug auf ein 3D-Modell, worin das 3D-Modell eine Keyframe-Basis und eine Basis von Positionen umfasst, die jedem Keyframe zugeordnet sind, worin jeder Keyframe insbesondere durch Referenzpunkte gekennzeichnet ist, worin das Computerprogrammprodukt Programmcodebefehle umfasst, um bei Ausführung des Computerprogrammprodukts auf einem Computer die Schritte eines Verfahrens auszuführen, das einen ersten Ausführungsstrang umfasst, der umfasst:
- einen Schritt zum Empfangen eines Videostroms von der Kamera, der aus mehreren Bildern besteht,
- einen Schritt zum Zuordnen von Referenzpunkten des zuletzt empfangenen Bildes des Videostroms, das als aktuelles Bild bezeichnet wird, mit Referenzpunkten eines Keyframes des 3D-Modells durch einen Zuordnungsalgorithmus,
- einen Schritt zum Schätzen der aktuellen Position der Kamera anhand des Keyframes, der als ausgewählter Keyframe bezeichnet wird und die höchste Anzahl an Referenzpunkten aufweist, die dieser mit dem aktuellen Bild gemeinsam hat, indem die Verschiebung zwischen der Position der Kamera, die mit dem ausgewählten Keyframe verbunden ist, und der aktuellen Position der Kamera, die mit dem aktuellen Bild verbunden ist, geschätzt wird,
**dadurch gekennzeichnet, dass** das Verfahren ferner umfasst:
- wenn die Anzahl der gemeinsamen Referenzpunkte zwischen dem ausgewählten Keyframe und dem aktuellen Bild kleiner oder gleich einem bestimmten Schwellenwert ist, einen Schritt zum Inkrementieren eines Platzierungsverlustzählers, oder
- wenn die Anzahl der gemeinsamen Referenzpunkte zwischen dem ausgewählten Keyframe und dem aktuellen Bild größer als der bestimmte Schwellenwert ist, einen Schritt zum Speichern des aktuellen Bildes des Videostroms in einem Pufferspeicher,
und darin, dass das Verfahren ferner, wenn der Platzierungsverlustzähler größer oder gleich einem bestimmten Wert ist, einen zweiten Ausführungsstrang umfasst, der umfasst:
- einen Schritt zum Analysieren der Qualität der Schätzung der Positionierung der Kamera anhand des im Pufferspeicher gespeicherten Bildes,
- einen Schritt zum Analysieren der Schärfe des im Pufferspeicher gespeicherten Bildes anhand von Daten, die für die Bewegung der Kamera repräsentativ sind, und
- einen Schritt des Hinzufügens des im Pufferspeicher gespeicherten Bildes zur Keyframe-Basis als neues Keyframe, wenn die Qualität der Schätzung der Position der Kamera anhand des gespeicherten Bildes und die Schärfe des gespeicherten Bildes vorgegebenen Kriterien entsprechen, andernfalls einen Schritt des Entfernens des im Pufferspeicher gespeicherten Bildes.

10. Endoskopisches Bildgebungssystem, **dadurch gekennzeichnet, dass** es ein Endoskop umfasst, das zum Erfassen eines Videostroms ausgestaltet ist, eine Nachführvorrichtung gemäß Anspruch 8, die zum Nachverfolgen der Position des Endoskops ausgestaltet ist, und einen Bildschirm, der zum Anzeigen von durch das Endoskop erfassten Bildern und zusätzlichen Informationen konfiguriert ist, die von der Verarbeitungseinheit entsprechend der Position des Endoskops in Bezug auf das 3D-Modell bereitgestellt werden.

## Claims

1. Method for real-time tracking of the placement of a camera with respect to a 3D model, said 3D model comprising a keyframe base and a base of placements which are associated with each keyframe, each keyframe being in particular **characterized by** reference points, said method comprising a first thread of execution (110) comprising:
- a step (112) of receiving a video stream from the camera composed of a plurality of images,
- a step (114) of mapping reference points of the last received image of the video stream, referred to as the current image, with reference points of a keyframe of the 3D model by a mapping algorithm,
- a step (116) of estimating the current placement of the camera from the keyframe, referred to as the selected keyframe, comprising the highest number of reference points in common with the current image, by estimating the shift between the placement of the camera associated with the selected keyframe from the placement base and the current placement of the camera associated with the current image,
**characterized in that** the method further comprises:
- if the number of reference points in common between the selected keyframe and the current image is lower than or equal to a predetermined threshold, a step (124) of incrementing a loss-of-placement counter, or
- if the number of reference points in common between the selected keyframe and the current image is higher than the predetermined threshold, a step (122) of storing the current image of the video stream in a buffer memory,
and **in that** the method further comprises, if the loss-of-placement counter is higher than or equal to a predetermined value, a second thread of execution (150) comprising:
- a step (152) of analyzing the quality of the estimation of the placement of the camera from the image stored in the buffer memory,
- a step (154) of analyzing the sharpness of the image stored in the buffer memory from data representative of the movement of the camera,
- if the quality of the estimation of the placement of the camera from the stored image and the sharpness of the stored image conform to predetermined criteria, a step (156) of adding the image stored in the buffer memory to the keyframe base as a new keyframe, otherwise a step (158) of removing the image stored in the buffer memory.

2. Tracking method as claimed in claim 1, **characterized in that** the first thread of execution and the second thread of execution are executed in parallel.

3. Tracking method as claimed in any one of claims 1 or 2, **characterized in that** the predetermined threshold is higher than or equal to fifty.

4. Tracking method as claimed in any one of claims 1 to 3, **characterized in that** the step of analyzing the quality of the estimation of the placement comprises at least one of the following sub-steps:
- a sub-step of calculating the spatial coverage of the reference points,
- a sub-step of calculating the error in the estimation of the estimated placement between the reference points observed in the image stored in the buffer memory and the reference points calculated from the selected image and the estimation of the placement.

5. Tracking method as claimed in any one of claims 1 to 4, **characterized in that** the step of analyzing the sharpness of the image comprises a sub-step of calculating the movement of reference points for the calculation of the speed and/or the acceleration and/or the jolt of said reference points.

6. Tracking method as claimed in any one of claims 1 to 5, **characterized in that** the keyframe base comprises a static part comprising predefined static keyframes and a dynamic part which stores the new keyframes added in the step adding of adding the image stored in the buffer memory to the keyframe base.

7. Tracking method as claimed in any one of claims 1 to 6, **characterized in that** it comprises a step of measuring for each keyframe the duration from the last mapping of said keyframe with an image of the video stream, and **in that**, if the number of the keyframe is higher than or equal to a predetermined limit number, the step of adding the image stored in the buffer memory to the keyframe base comprises a sub-step of removing the keyframe having the longest duration since the last mapping.

8. Device for real-time tracking of the placement of a camera with respect to a 3D model, said 3D model comprising a keyframe base and a base of placements which are associated with each keyframe, each keyframe being in particular **characterized by** reference points, said device comprising a first tracking module comprising:
- a sub-module for receiving a video stream from the camera composed of a plurality of images,
- a sub-module for mapping reference points of the last received image of the video stream, referred to as the current image, with reference points of a keyframe of the 3D model by a mapping algorithm,
- a sub-module for estimating the current placement of the camera from the keyframe, referred to as the selected keyframe, comprising the highest number of reference points in common with the current image, by estimating the shift between the placement of the camera associated with the selected keyframe from the placement base and the current placement of the camera associated with the current image,
**characterized in that** the device further comprises a module for managing the keyframe base comprising:
- a sub-module comprising a loss-of-placement counter incremented if the number of reference points in common between the selected keyframe and the current image is lower than or equal to a predetermined threshold,
- a sub-module for transferring the current image of the video stream to a buffer memory of the device if the number of reference points in common between the selected keyframe and the current image is higher than the predetermined threshold,
- a sub-module for comparing the value of the loss-of-placement counter with a predetermined value,
- a sub-module for analyzing the quality of the estimation of the placement of the camera from the image stored in the buffer memory,
- a sub-module for analyzing the sharpness of the image stored in the buffer memory from data representative of the movement of the camera,
- a sub-module for managing the buffer memory, configured to add the image stored in the keyframe base if the quality of the estimation of the placement of the camera from the stored image and the sharpness of the stored image conform to predetermined criteria, and to remove the image stored in the buffer memory otherwise.

9. Computer program product for real-time tracking of the placement of a camera with respect to a 3D model, said 3D model comprising a keyframe base and a base of placements which are associated with each keyframe, each keyframe being in particular **characterized by** reference points, said computer program product comprising program code instructions for the execution, when said computer program product is executed on a computer, of the steps of a method comprising a first thread of execution comprising:
- a step of receiving a video stream from the camera composed of a plurality of images,
- a step of mapping reference points of the last received image of the video stream, referred to as the current image, with reference points of a keyframe of the 3D model by a mapping algorithm,
- a step of estimating the current placement of the camera from the keyframe, referred to as the selected keyframe, comprising the highest number of reference points in common with the current image, by estimating the shift between the placement of the camera associated with the selected keyframe from the placement base and the current placement of the camera associated with the current image,
**characterized in that** the method further comprises:
- if the number of reference points in common between the selected keyframe and the current image is lower than or equal to a predetermined threshold, a step of incrementing a loss-of-placement counter, or
- if the number of reference points in common between the selected keyframe and the current image is higher than the predetermined threshold, a step of storing the current image of the video stream in a buffer memory,
and **in that** the method further comprises, if the loss-of-placement counter is higher than or equal to a predetermined value, a second thread of execution comprising:
- a step of analyzing the quality of the estimation of the placement of the camera from the image stored in the buffer memory,
- a step of analyzing the sharpness of the image stored in the buffer memory from data representative of the movement of the camera,
- if the quality of the estimation of the placement of the camera from the stored image and the sharpness of the stored image conform to predetermined criteria, a step of adding the image stored in the buffer memory to the keyframe base as a new keyframe, otherwise a step of removing the image stored in the buffer memory.

10. Endoscopic imaging system **characterized in that** it comprises an endoscope configured to capture a video stream, a tracking device as claimed in claim 8 configured for tracking the placement of the endoscope, and a viewing screen configured to display images acquired by the endoscope and additional information supplied by the processing unit according to the placement of the endoscope with respect to the 3D model.
